# EUROPEAN PATENT SPECIFICATION

(11) **EP 0 465 681 B1**
(45) Date of publication and mention of the grant of the patent: **26.03.1997**
(21) Application number: 91903702.8
(22) Date of filing: 30.01.1991
(51) Int. Cl.: B29C 55/18, B32B 27/34, B65D 65/40

(54) **MONOAXIALLY ORIENTED MULTILAYERED PACKAGING MATERIAL**
MONOAXIAL ORIENTIERTES MEHRLAGIGES VERPACKUNGSMATERIAL
MATERIAU D'EMBALLAGE MULTICOUCHE A ORIENTATION MONOAXIALE

(30) Priority: 30.01.1990 JP 20307/90
(43) Date of publication of application: 15.01.1992
(73) Proprietor: NIPPON PETROCHEMICALS CO., LTD., Tokyo 100 (JP)
(72) Inventor: TAKAHASHI, Tomonori, Chigasaki-shi, Kanagawa 253 (JP); KIMURA, Masato, Fujisawa-shi, Kanagawa 252 (JP); OKA, Masataka, Fujisawa-shi, Kanagawa 251 (JP); OGASAWARA, Isamu, Kawasaki-shi, Kanagawa 211 (JP)
(74) Representative: Schübel-Hopf, Ursula
(86) International application number: JP9100115
(87) International publication number: WO9111317

(56) References cited:
- EP-A- 0 230 344
- CA-A- 1 181 213
- DE-A- 1 779 138
- DE-A- 3 604 002
- FR-A- 2 282 985
- JP-A- 5 878 727
- JP-A-57 176 126
- JP-A-59 106 964
- JP-B- 6 153 218
- US-A- 4 818 592
- DATABASE WPIL Section Ch, Week 28, Derwent Publications Ltd., London, GB; Class A, AN 82-58120E & JP-A-57 089 926 (NIPPON PETROCHEM.) 4 June 1982

## Description

### - TECHNICAL FIELD -

This invention relates to a multilayered packaging material having good piercing resistance and tearability and being excellent in gas impermeability, transparency, gloss and so forth, and also relates to a method of producing the packing material.

### - BACKGROUND ART -

In the conventional art, multilayered packaging materials with double or more layers have been proposed. They are composed of polyamide resin and polyolefins such as polyethylene or other highly gas-impermeable resins such as ethylene-vinyl alcohol copolymer, polyvinylidene chloride and polyacrylonitrile. The multilayered packaging materials of this kind have excellent combined characteristics of piercing resistance, thermal resistance, low-temperature resistance and gas impermeability which are inherent in the polyamide resin, moisture impermeability and heat-sealable property which are inherent in the polyolefin resin and excellent gas impermeability which is inherent in ethylene-vinyl alcohol copolymer. Thus they have been widely used for food packaging, especially as bags for meat, pickles, cakes, sauces, soups and the like.

DE-A-1 779 138 relates to a method of producing polyalkylene-based, in particular polyethylene-based, shrinkable films characterized by stretching a polyalkylene film coated with a polyamide layer which is relatively thin as compared with the thickness of the polyalkylene layer.

Japanese patent no. 57-89926 discloses a packaging film obtained by rolling, e.g. a polyethylene layer and a polyamide resin layer at a rolling ratio of 1.5 to 8. As further gas barrier layers within said packaging film there are mentioned saponified ethylene-vinyl acetate copolymer, vinyl alcohol resin, acrylonitrile resin, polyamide resin and polyvinylidene chloride resin. As the layer of an olefinic resin there is mentioned low- or middle-density polyethylene. According to the examples disclosed therein, the ratio between the thicknesses of the olefinic resin layer and the resin layer having gas barrier properties is 1:1, leading to a multilayered film or sheet having good impermeability to gases and water vapour and transparency being useful as a packaging for food etc.

FR-A-2 282 985 discloses a multilayer film by rolling, e.g. a polyamide film and a polyethylene film and a method for producing the same. The thickness of the polyamide and the polyethylene film is reduced from 100 micron to 18 and 500 micron respectively, corresponding to a rolling ratio of about 6. However, also in this case, both layers have about the same thicknesses.

The multilayered packaging materials made of the above combination are produced by methods of coextrusion, dry lamination or the like. As for the kinds of the packaging materials, there are non-oriented materials which are obtained by co-extrusion and wholly or partially oriented multilayered packaging materials which are made by biaxially orienting a single resin such as nylon, polypropylene, ethylene-vinyl alcohol copolymer or polyethylene-terephthalate and then joining the oriented resins together by using a method of dry lamination or extrusion lamination.

In these conventional multilayered packaging materials, non-oriented type is characterized by the excellent piercing resistance which is inherent in the polyamide resin. However, the material is hardly torn, so that it poses a problem, for example, in the difficulty to be opened in the case of the widely used packaging bags.

As for the packaging materials obtained by laminating biaxially oriented resins, they have good tearability, however, the direction of tearing cannot be settled. Furthermore, when the packaging bags are made by laminating with a sealant resin layer, their tearability is impaired and the easily opening property is not good.

As a result of investigations carried out by the inventors to solve the above disadvantages in the conventional arts, the present invention has been accomplished.

### - DISCLOSURE OF INVENTION -

This invention relates to a monoaxially oriented multilayered tearable packaging material which is obtained by orienting a multilayered structure composed of at least one polyamide resin layer and at least one other thermoplastic resin layer(s) by monoaxial rolling in a monoaxial rolling ratio of 1.5 to 7.0, having a thickness of the polyamide resin layer of 3 to 30 µm, and being characterized in that
the thickness(es) of the other thermoplastic resin layer(s) is (are) at least twice as large as that of the polyamide resin.

The other invention relates to a to a method of producing a monoaxially oriented multilayered tearable packaging material as claimed in any of the claims 1 to 3 which comprises the steps of orienting a multilayered structure composed of at least one polyamide resin layer and at least one other thermoplastic resin layer(s) by monoaxial rolling in a monoaxial rolling ratio of 1.5 to 7.0 and in a temperature range from the lowest melting point of the component resins to a temperature lower by 70°C than said melting point, wherein the thickness of the polyamide resin layer is 3 to 30 µm and the thickness(es) of the other thermoplastic resin layer(s) is (are) at least twice as large as that of the polyamide resin layer.

The present invention will be described in more detail in the following.

The multilayered packaging material of the invention is a film composed of at least one polyamide resin layer and at least one other resin layer. The polyamide resin is generally hardly torn, while the other resin such as high density polyethylene or polypropylene becomes very tearable in the direction of orientation when it is monoaxially oriented. The thicknesses of the component resin layers must be determined in such a manner that the thickness of the polyamide resin layer is 3 to 30 µm and the thickness(es) of other thermoplastic resin layer(s) such as high density polyethylene is (are) at least twice as large as that of the polyamide resin layer.

When the thickness of the polyamide resin layer is smaller than 3 µm, the multilayered packaging material cannot show the foregoing characteristic of the polyamide resin. When the thickness is larger than 30 µm, the tearability which is a main feature of this invention is insufficient.

The thickness of other thermoplastic resin layer has a large effect on the tearability of a multi-layered packaging material.

The polyamide resin have various characteristics as described above depending on its molecular structure. With regard to the tearability, the resin cannot be changed to have good tearability even when it is stretched in one direction to some extent, for example, to about 5-fold. However, the present inventors have found out that the polyamide resin can be changed to show the tearability in one direction by combining the polyamide resin with other resins having good tearability in the form of multilayered structure and orienting monoaxially.

More particularly, only when the thickness of the polyamide resin layer is restricted to 3 to 30 µm and the thickness of the other thermoplastic resin layer or layers are at least twice as large as that of the polyamide resin layer, the multilayered packaging material provides excellent tearability. If the thickness of the other thermoplastic resin layer is smaller than twice that of the polyamide resin layer, satisfactory tearability cannot be obtained even when the laminate is oriented monoaxially to about 7-fold.

In view of the tearability, the total thickness of a monoaxially oriented multilayered tearable packaging material of this invention is preferably up to 200 µm, and more preferably up to 150 µm.

Monoaxial orientation is inevitable to provide the tearability. The monoaxial orientation is conducted by monoaxial rolling. The ratio of rolling in this invention may be in the range of 1.5 to 7, preferably 2 to 6. When the rolling ratio is lower than 1.5, the multilayered tearable packaging material cannot have sufficient tearability. To the contrary, when the ratio is higher than 7, the degree of thermal shrinkage is large, so that heat-sealed portions are creased assuming extremely undesirable appearance when bags are made by heat-sealing with using such a material.

The above-mentioned orientation is conducted by monoaxial rolling, because uneven stretching is not caused to occur even in a low ratio of 1.5 and in addition, moisture impermeability increases greatly after the rolling.

The monoaxially oriented packaging material of this invention can include one or more layers of different resins in addition to the foregoing structure composed of a polyamide resin layer and other thermoplastic resin layer(s). For example, an adhesive resin layer can be added in order to join the polyamide resin layer and other thermoplastic resin layer, or a sealant resin layer for packaging bags. Desirable ones as these additional resin layers are essentially crystalline resins. If the additional resin can be oriented by stretching, it does not have any influence on the tearability with a thickness like ordinary films for laminating, for example, 3 to 30 µm as an adhesive layer and 3 to 60 µm as a sealant layer.

With regard to the sealant layer, it is preferable to provide such a layer that has a melting point lower than the lowest melting point of all component resins, on either an innermost layer or an outermost layer of a multilayered packaging material that is composed of the foregoing polyamide resin and other thermoplastic resins. This is because the multilayered packaging material does not lose the characteristics such as stretched property in the processing after the formation of bags.

Co-extruded multilayered films made by coextrusion or multilayered materials made by dry lamination or else are used as the multilayered films to be stretched. Otherwise, each of the foregoing polyamide resin film and other thermoplastic resin film can be fed simultaneously and laminated in the process of stretching.

Exemplified as polyamide (PA) resins used for preparing the multilayered packaging material of this invention are nylon 6, nylon 66, nylon 10, nylon 12 and nylon copolymer.

It is preferable to use nylon or its copolymer having a melting point below 240°C, especially when it is used in combination with a resin to be formed within a relatively narrow range of temperature such as ethylene-vinyl alcohol copolymer (EVOH).

As the other thermoplastic resins used in this invention, it is preferable to use inherently orientable resins, that is crystalline resins. Exemplified as these resins are polyolefin (PO) resins such as high density polyethylene (HDPE), linear low density polyethylene (LLDPE), polypropylene (PP) and polybutene-1 ; highly impermeable resins such as ethylene-vinyl alcohol copolymer (EVOH), polyvinylidene chloride (PVDC), polyacrylonitrile (PAN); polyester resins such as polyethyleneterephthalate (PET); and polystyrene (PSt) resins.

Exemplified as the adhesive resins are polyolefin resins having polar groups such as ionomers, copolymer of ethylene and unsaturated carboxylic acid or its derivative, polyolefin modified with unsaturated carboxylic acid such as maleic acid or its derivative and ethylene-vinyl acetate copolymer.

As the sealant resins, it is preferable to use polyolefin resins such as low density polyethylene, linear low density polyethylene, propylene-ethylene copolymer and ethylene-vinyl acetate copolymer. Furthermore, above-mentioned orientable resins and adhesive resins may also be used for the sealant layer.

Exemplified as the combinations of these resins are PA/adhesive resin/HDPE, PA/adhesive resin/LLDPE, PA/adhesive resin/PP, PA/EVOH, PA/EVOH/adhesive resin/HDPE, PA/EVOH/adhesive resin/PP, PA/adhesive resin/PVDC/adhesive resin/HDPE, PA/adhesive resin/PAN/adhesive resin/HDPE, PA/adhesive resin/HDPE/LLDPE, HDPE/adhesive resin/PA/adhesive resin/HDPE and PP/adhesive resin/PA/adhesive resin/PP.

The method of production that is employed in this invention will be described in the following.

The producing method of the present invention comprises the step of a passing a multi layered structure composed of at least one polyamide resin layer and at least one other thermoplastic resin layer(s) through at least one pair of rolls in a heated state at temperatures in the range from the lowest melting point of component resins to a temperature lower than the melting point by 70°C, thereby monoaxially rolling the layered structure under pressure. The ratio of rolling (ratio of thickness before rolling to the thickness after rolling) is in the range of 1.5 to 7.0. By this step, the thickness of the polyamide resin layer is made 3 to 30 µm and the thickness of other thermoplastic resin layer(s) is at least twice as large as that of the polyamide resin layer.

It is important that the monoaxial rolling at a rolling ratio of 1.5 to 7.0 is carried out in the temperature range from the lowest melting point of the component resins to the temperature lower by 70°C than that melting point.

When the rolling temperature is lower by more than 70°C than the lowest melting point of component resins, not only the efficiency of rolling and transparency are impaired but also the necessary pressing force of rolls is increased and the rate of forming is reduced.

The above rolling method is is operated continuously at high speed. The rolling is a method that passes the multilayered structure through at least one pair of rolls thereby monoaxially orienting the layered structure by the pressing force of pressing. Depending on rotating speed, constant-speed rolling and varied-speed rolling are known. The varied-speed rolling is preferable, because transparency and gas impermeability are improved under a relatively small pressure.

In order to improve the transparency, specular rolls are preferably used for orienting. The specular rolls are plated with hard chromium or the like. The surface roughness (JIS B 0601) of the rolls is not higher than is, preferably lower than 0.8s, and more preferably lower than 0.5s.

The monoaxially oriented multilayered tearable packaging material of this invention is composed of at least one polyamide resin layer and at least one other thermoplastic resin layer(s), wherein the thicknesses of the resin layers are limited within the specific ranges, and furthermore, the material is oriented monoaxially in the specific conditions. As a result, the material has tearability in one direction as well as excellent piercing resistance which is characteristic of the polyamide resin. Still further, heat-sealed portions are not become creased when it is formed into bags by heat-sealing.

### - BEST METHOD FOR CARRYING OUT THE INVENTION -

In the following, the present invention will be described in more detail with reference to experiments.

### Experiment Example 1

A nylon 6 (medium viscosity, specific gravity: 1.13, melting point: 225°C, trade name: AMILAN CM1021, made by Toray Industries, Inc.) was used as a polyamide resin, and a high density polyethylene (MFR: 1.0 g/10min, density: 0.956 g/cm³, trade name: NISSEKI Polyethylene E710, made by Nippon Petrochemicals Co., Ltd.) was used as another thermoplastic resin. Polyethylene modified with maleic acid (MFR: 0.8 g/10min, density: 0.91 g/cm³, trade name: NISSEKI N-Polymer L6033, made by Nippon Petrochemicals Co., Ltd.) was used as an adhesive resin. Triple-layered films having various thicknesses of layers were formed by co-extrusion method, and they are then oriented in various ratios at a rolling temperature of 110°C, using a rolling apparatus (roll length: 520mm, length/diameter (L/D) =1.9, surface roughness: 0.2s and 1s). Properties of the obtained films were tested and results are shown in the following Table 1.

### Experiment Example 2

A nylon copolymer (higher-medium viscosity, specific gravity: 1.13, melting point: 200°C, trade name: AMILAN CM6041, made by Toray Industries Inc.) was used as a polyamide resin, and polypropylene (MFR: 0.5 g/10min, density: 0.91 g/cm³, trade name: NISSEKI Polypro E110G, made by Nippon Petrochemicals Co., Ltd.) was used as another thermoplastic resin. A polypropylene modified with maleic acid (MFR: 7.5 g/10 min, density: 0.91 g/cm³, trade name: NISSEKI N-Polymer P4070, made by Nippon Petrochemicals Co., Ltd.) was used as an adhesive resin. Triple-layered films having various thicknesses were formed by co-extrusion method, and they were then oriented at various ratios at a rolling temperature of 135°C by using the same rolling apparatus as used in Experiment Example 1. Properties of the obtained films were tested and the results are shown in Table 2.

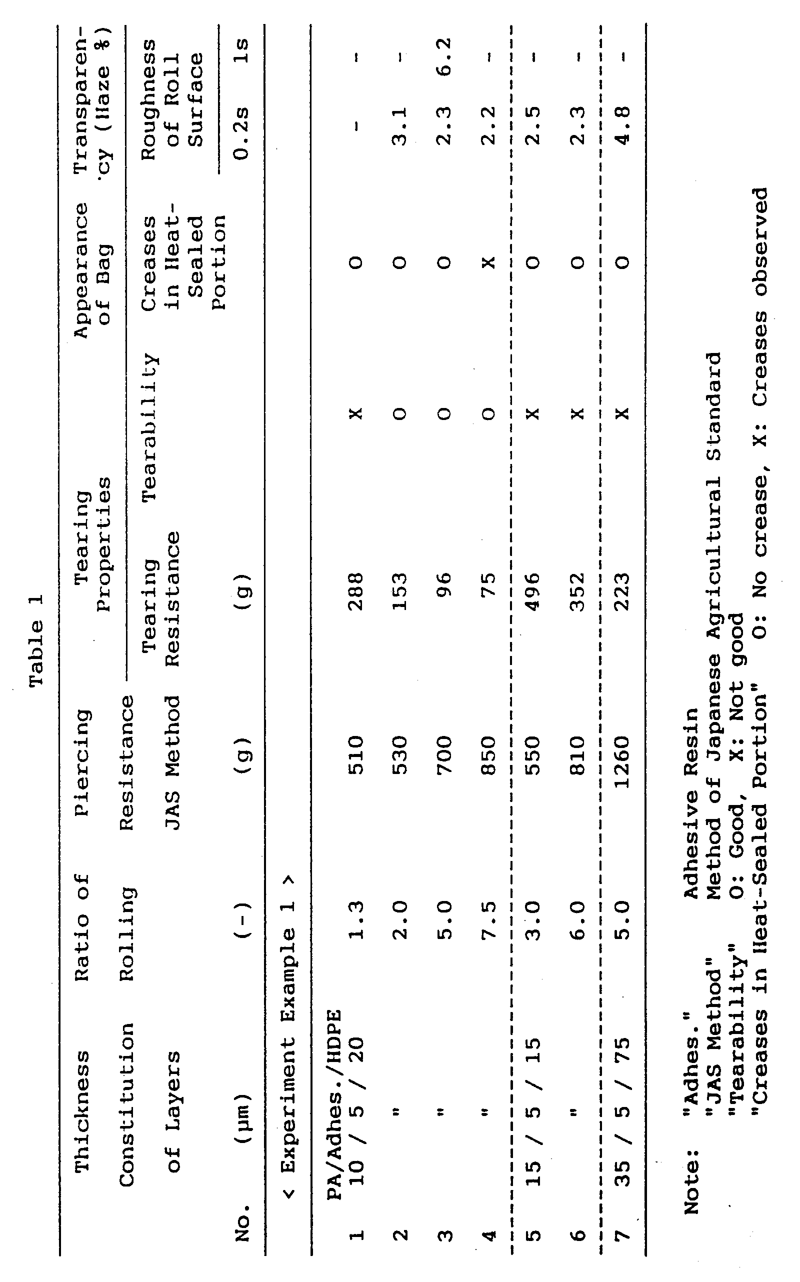

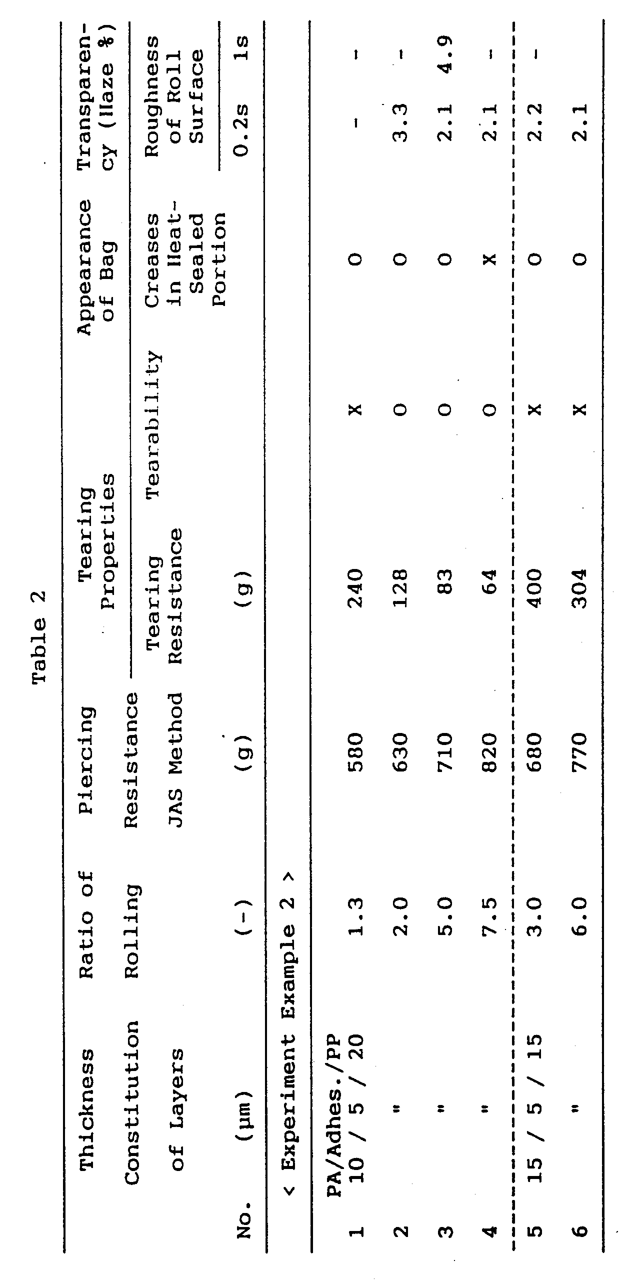

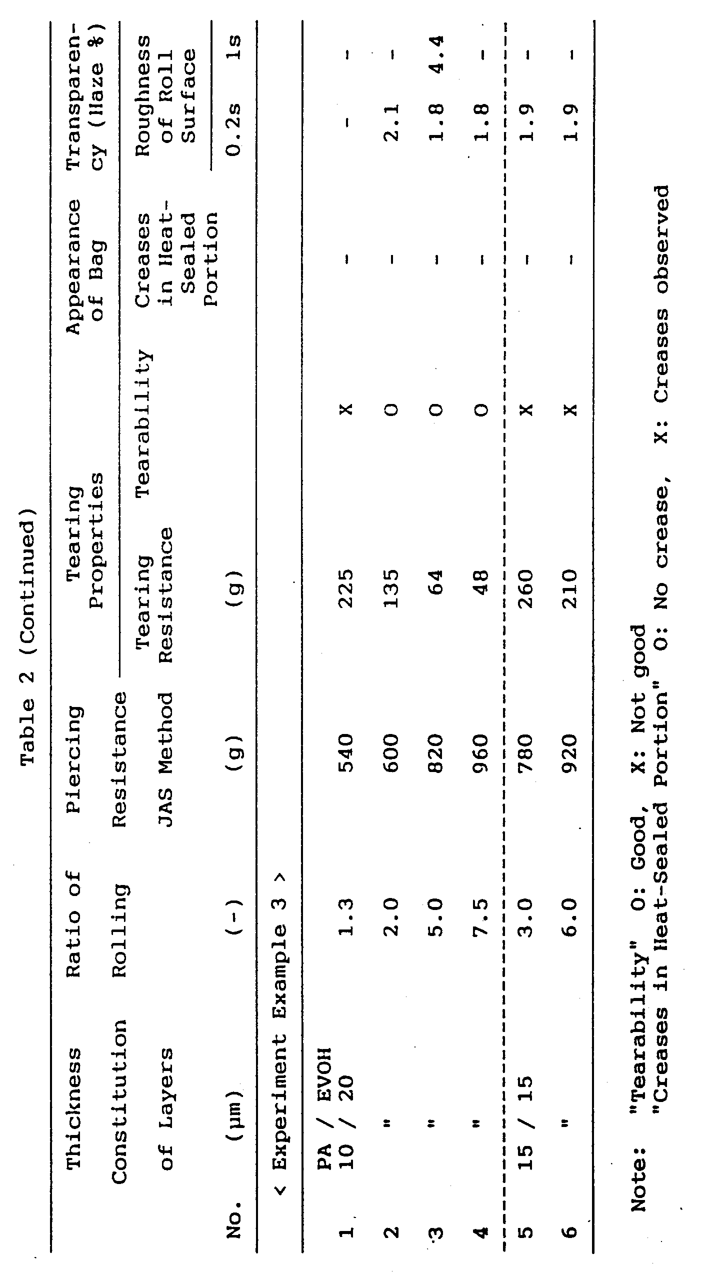

### Experiment Example 3

A nylon copolymer (higher-medium viscosity, specific gravity: 1.13, melting point: 200°C, trade name: AMILAN CM6041, made by Toray Industries, Inc.) was used as a polyamide resin, and an ethylene-vinyl alcohol copolymer (trade name: EVAL EP·F101, made by Kurarey Co., Ltd.). Double-layered films having various thicknesses were formed by co-extrusion method. They were then oriented in various ratios at a rolling temperature of 120°C, using a rolling apparatus (roll length: 520 mm, length/diameter (L/D) = 1.9, surface roughness: 0.2s and 1s). Properties of the obtained films were tested and the results are also shown in Table 2.

### Experiment Example 4

Nylon 6 (medium viscosity, specific gravity: 1.13, melting point: 225°C, trade name: AMILAN CM1021, made by Toray Industries, Inc.) was used as a polyamide resin, and high density polyethylene (MFR: 1.0 g/10 min, density: 0.956 g/cm³, trade name: NISSEKI Polyethylene E710, made by Nippon Petrochemicals Co., Ltd.) was used as another thermoplastic resin. A polyethylene modified with maleic acid (MFR: 0.8 g/10 min, density: 0.91 g/cm³, trade name: NISSEKI N-Polymer L6033, made by Nippon Petrochemicals Co., Ltd.) was used as an adhesive resin, and furthermore a linear low density polyethylene (density: 0.935 g/cm³, MFR: 2.0 g/10 Thin, melting point: 126°C, trade name: NISSEKI LINIREX AF3710, made by Nippon Petrochemicals Co., Ltd.) was used as a sealant layer. Quadruple-layered films having layers of various thicknesses were formed by co-extrusion method, and they were then oriented in various ratios at a rolling temperature of 110°C, by using a rolling apparatus (roll length: 520mm, length/diameter (L/D) = 1.9, surface roughness: 0.2s and 1s). Properties of the obtained films were tested and the results are shown in Table 3.

### Experiment Example 5

For comparison, single layer films having thicknesses of 10 µm and 30 µm were formed with nylon 6 (medium viscosity, specific gravity: 1.13, melting point: 225°C, trade name: AMILAN CM1021, made by Toray Industries, Inc.) and they were oriented by using the same rolling apparatus as that used in Experiment Example 1. Properties of the oriented films are shown in Table 3.

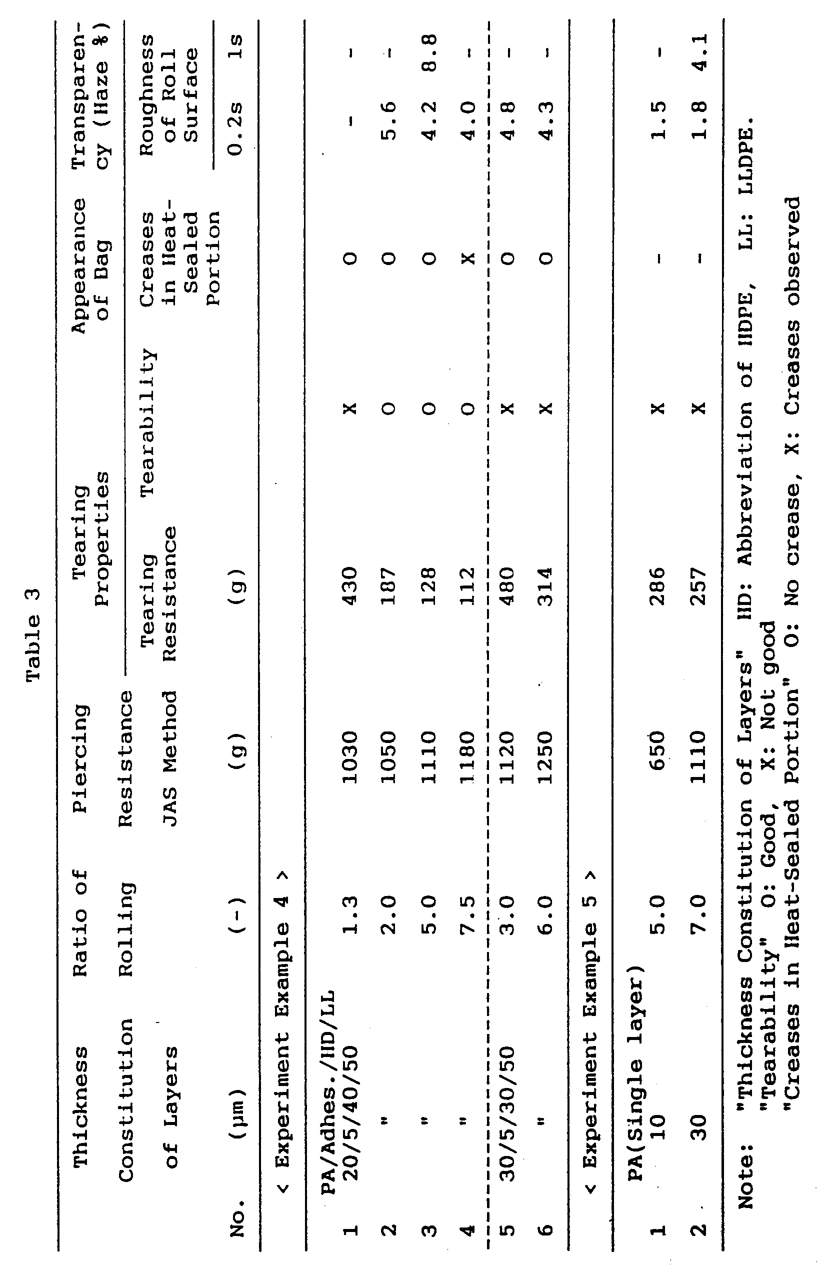

### - INDUSTRIAL APPLICABILITY -

The multilayered tearable packaging material of this invention is excellent in tearability, gas impermeability and so forth, and it can be used efficiently for food packaging, especially for making bags. In the case of packaging the articles having hard and sharp edges such as meat with bones, polyamide resins have been widely used, because they are characterized by high piercing resistance and film strength. In such a case, a multilayered packaging material of this invention can be used as bags which are excellent in easiness in opening owing to its tearability in a single direction as well as its excellent piercing resistance.

In the case of packages of liquids such as sauces and soups, it is necessary to take care to avoid staining clothes with the liquid when opening containers. Especially, for old people and children, it was difficult to open the bags made of conventional materials. In such a case, the packaging material according to the present invention can also be used conveniently.

## Claims

1. A monoaxially oriented multilayered tearable packaging material which is obtained by orienting a multilayered structure composed of at least one polyamide resin layer and at least one other thermoplastic resin layer(s) by monoaxial rolling in a monoaxial rolling ratio of 1.5 to 7.0, having a thickness of the polyamide resin layer of 3 to 30 µm, and being characterized in that
the thickness(es) of the other thermoplastic resin layer(s) is (are) at least twice as large as that of the polyamide resin layer.

2. The monoaxially oriented multilayered tearable packaging material as claimed in claim 1, wherein said other thermoplastic resins are high density polyethylene, linear low density polyethylene, polypropylene and ethylene-vinyl alcohol copolymer.

3. The monoaxially oriented multilayered tearable packaging material as claimed in claim 1 or 2, wherein a sealant layer having a melting point lower than the lowest melting point of component resins is provided on either the innermost or the outermost layer of the multilayered packaging material which is composed of the polyamide resin and the other thermoplastic resin(s).

4. A method of producing a monoaxially oriented multilayered tearable packaging material as claimed in any of the claims 1 to 3 which comprises the step of orienting a multilayered structure composed of at least one polyamide resin layer and at least one other thermoplastic resin layer(s) by monoaxial rolling in a monoaxial rolling ratio of 1.5 to 7.0 and in a temperature range from the lowest melting point of the component resins to a temperature lower by 70°C than said melting point, wherein the thickness of the polyamide resin layer is 3 to 30 µm and the thickness(es) of the other thermoplastic resin layer(s) is (are) at least twice as large as that of the polyamide resin layer.

5. The method as claimed in claim 4, wherein the surface roughness (JIS B 0601) of a roll used in said rolling is not higher than 1s.

## Patentansprüche

1. Monoaxial orientiertes mehrlagiges reißbares Verpackungsmaterial, das durch Orientieren einer mehrlagigen Struktur, die aus mindestens einer Polyamidharzschicht und mindestens einer anderen thermoplastischen Harzschicht besteht, durch monoaxiales Walzen in einem Verhältnis des monoaxialen Walzens von 1,5 bis 7,0 erhalten wird und eine Dicke der Polyamidharzschicht von 3 bis 30 µm hat, und das dadurch gekennzeichnet ist, daß die Dicke bzw. die Dicken der anderen thermoplastischen Harzschicht bzw. Schichten mindestens zweimal so groß ist bzw. sind als die der Polyamidharzschicht.

2. Monoaxial orientiertes mehrlagiges reißbares Verpackungsmaterial nach Anspruch 1, wobei die anderen thermoplastischen Harze Polyethylen hoher Dichte, lineares Polyethylen niederer Dichte, Polypropylen und Ethylen-Vinylalkohol-Copolymeres sind.

3. Monoaxial orientiertes mehrlagiges reißbares Verpackungsmaterial nach Anspruch 1 oder 2, wobei eine Siegelungsschicht mit einem Schmelzpunkt unterhalb des niedrigsten Schmelzpunkts der als Komponenten vorhandenen Harze entweder auf der innersten oder der äußersten Schicht des mehrlagigen Verpackungsmaterials, welches aus dem Polyamidharz und dem oder den anderen thermoplastischen Harzen besteht, vorgesehen ist.

4. Verfahren zur Herstellung eines monoaxial orientierten mehrlagigen reißbaren Verpackungsmaterials nach einem der Ansprüche 1 bis 3, welches eine Stufe umfaßt, in der eine mehrlagige Struktur, die aus mindestens einer Polyamidharzschicht und mindestens einer anderen thermoplastischen Harzschicht gebildet ist, durch monoaxiales Walzen in einem Verhältnis des monoaxialen Walzens von 1,5 bis 7,0 und in einem Temperaturbereich vom niedrigsten Schmelzpunkt der die Bestandteile bildenden Harze bis zu einer Temperatur die um 70°C unterhalb dieses Schmelzpunkts liegt, orientiert wird, wobei die Dicke der Polyamidharzschicht 3 bis 30 µm und die Dicke bzw. Dicken der anderen thermoplastischen Harzschicht bzw. Schichten mindestens zweimal so groß wie die der Polyamidharzschicht ist (sind).

5. Verfahren nach Anspruch 4, wobei die Oberflächenrauhigkeit (JIS B 0601) einer bei dem Walzen eingesetzten Walze nicht höher als 1s ist.

## Revendications

1. Matériau d'emballage déchirable multicouche monoaxialement orienté que l'on obtient en orientant une structure multicouche composée d'au moins une couche de résine polyamide et d'au moins une ou plusieurs autres couches de résine thermoplastique par un laminage monoaxial dans un rapport de laminage monoaxial de 1,5 à 7,0, ayant une épaisseur de la couche de résine polyamide de 3 à 30 µm, et caractérisé en ce que l'épaisseur de la(des) autre(s) couche(s) de résine thermoplastique est au moins double de celle de la couche de résine polyamide.

2. Matériau d'emballage déchirable multicouche monoaxialement orienté selon la revendication 1, dans lequel lesdites autres résines thermoplastiques sont un polyéthylène haute densité, un polyéthylène basse densité linéaire, un polypropylène et un copolymère éthylène - alcool vinylique.

3. Matériau d'emballage déchirable multicouche monoaxialement orienté selon la revendication 1 ou 2, dans lequel une couche d'étanchéité ayant un point de fusion inférieur au plus faible point de fusion des résines composantes est fournie soit sur la couche la plus interne, soit sur la couche la plus externe du matériau d'emballage multicouche qui est composé de la résine polyamide et de la(des) autre(s) résine(s) thermoplastique(s).

4. Procédé de production d'un matériau d'emballage déchirable multicouche monoaxialement orienté selon l'une quelconque des revendications 1 à 3, qui comprend les étapes consistant à orienter une structure multicouche composée d'au moins une couche de résine polyamide, et d'au moins une ou plusieurs autres couches de résine thermoplastique par un laminage monoaxial dans un rapport de laminage monoaxial de 1,5 à 7,0 et dans un intervalle de température allant du plus faible point de fusion des résines composantes à une température inférieure de 70°C audit point de fusion, où l'épaisseur de la couche de résine polyamide est de 3 à 30 µm et l'épaisseur de la(des) autre(s) couche(s) de résine thermoplastique est au moins deux fois plus importante que celle de la couche de résine polyamide.

5. Procédé selon la revendication 4, dans lequel la rugosité de surface (JIS B 0601) d'un cylindre utilisé dans ledit laminage ne dépasse pas 1 s.
